# EUROPÄISCHE PATENTSCHRIFT

(11) **EP 3 099 452 B1**
(45) Veröffentlichungstag und Bekanntmachung des Hinweises auf die Patenterteilung: **05.08.2020**
(21) Anmeldenummer: 15705216.8
(22) Anmeldetag: 30.01.2015
(51) Int. Cl.: B25J 19/06, B25J 9/16, F16P 3/14

(54) **SICHERHEITSEINRICHTUNG UND SICHERHEITSVERFAHREN**
SAFETY DEVICE AND SAFETY PROCESS
DISPOSITIF DE SÉCURITÉ ET PROCÉDÉ DE SÉCURITÉ

(30) Priorität: 30.01.2014 DE 202014100411 U
(43) Veröffentlichungstag der Anmeldung: 07.12.2016
(73) Patentinhaber: KUKA Systems GmbH, 86165 Augsburg (DE)
(72) Erfinder: GESCHKE, Harald, 86316 Friedberg (DE)
(74) Vertreter: Ernicke, Klaus Stefan
(86) Internationale Anmeldenummer: PCT/EP2015/051917
(87) Internationale Veröffentlichungsnummer: WO 2015/114089

(56) Entgegenhaltungen:
- WO-A1-2014/008929
- DE-A1- 10 152 543
- DE-A1- 10 216 023
- DE-A1-102004 048 563

## Beschreibung

Die Erfindung betrifft eine Sicherheitseinrichtung und ein Sicherheitsverfahren für Werker im Arbeitsbereich von automatischen Maschinen, insbesondere Industrierobotern, mit den Merkmalen im Oberbegriff der Verfahrens- und Vorrichtungshauptansprüche.

Eine solche Sicherheitstechnik ist aus der DE 102 16 023 A1 bekannt. Sie dient der kontrollierten Interaktion von Werker und Roboter. Hierbei wird die Bewegungsdynamik des Roboters beeinflusst und gezielt auf die detektierten Bewegungen des Werkers abgestimmt oder abgeschaltet.

Aus der Praxis ist es ferner bekannt, den Arbeitsraum eines Roboters optisch zu überwachen, z.B. durch ein Kamerasystem, um etwaige Kollisionsgefahren zwischen dem Roboter und einem Werker oder einem anderen Hindernis zu detektieren und den Roboter rechtzeitig abzuschalten. Ferner ist es bekannt für eine Mensch-Roboter-Kooperation oder -Kolaboration (abgekürzt MRK) einen taktilen Roboter einzusetzen.

Es ist Aufgabe der vorliegenden Erfindung, die Sicherheitstechnik für einen Werker weiter zu verbessern.

Die Erfindung löst diese Aufgabe mit den Merkmalen in den Verfahrens- und Vorrichtungshauptansprüchen.

Die beanspruchte Sicherheitstechnik, insbesondere die Sicherheitseinrichtung und das Sicherheitsverfahren, bieten einem Werker eine erhöhte Sicherheit. Die Sicherheitstechnik setzt vornehmlich am Werker an, der mittels einer mobilen und vom Werker zu tragenden Erfassungseinrichtung lokalisiert werden kann. Die erfassten Daten können von einer Auswerte- und Steuereinrichtung verarbeitet werden, wobei auch die über eine Schnittstelle eingegebenen Daten über den aktuellen Gefahrenbereich eines Industrieroboters oder einer anderer bewegten automatischen Maschine einbezogen werden. Diese Daten über den aktuellen Gefahrenbereich können mittels einer zur Sicherheitseinrichtung gehörenden Detektionseinrichtung aufgenommen und bereit gestellt werden. Sie können alternativ auch anderweitig detektiert und zugeführt werden.

Die Sicherheitstechnik erlaubt es, aus den vom Werker erfassten Daten und den vom Industrieroboter oder dergleichen detektierten Gefahrendaten eine bestehende oder drohende Kollisionsgefahr zu ermitteln und hieraus gegebenenfalls weitere Aktionen abzuleiten, z.B. die Ausgabe eines Signals, ein Nothalt des Roboters oder dergleichen.

Die Erfassungseinrichtung kann modular ausgebildet sein, wobei die räumlichen Positionen und gegebenenfalls die Bewegungen einzelner relevanter Körperteile des Werkers gezielt erfasst und zur Kollisions- und Gefahrenanalyse herangezogen werden können. Insbesondere kann aus diesen körperspezifischen Daten ein Personen-Sicherheits-Skelett erstellt und für die Kollisions- und Gefahrenanalyse herangezogen werden. In diesem aus den Erfassungsdaten aufbereiteten virtuellen Skelett sind einerseits die relevanten Körperteile, insbesondere die Gliedmaßen, simuliert und auch in ihrer eventuellen Bewegung durch einen dreidimensionalen Vektor charakterisiert. Zudem können die Skelettteile, insbesondere die Gliedmaßen, von einem Hüllbereich mit einem Sicherheitsabstand umgeben sein, der ebenfalls virtuell ist und der in einem Rechenmodell auf eine eventuelle Kollision mit einem Roboter oder dergleichen überprüft wird. Der Roboter oder dergleichen kann durch ein Maschinen-Sicherheits-Skelett entsprechender Art und gegebenenfalls auch mit ein oder mehreren Bewegungsvektoren und ein oder mehreren Hüllbereichen, symbolisiert sein. Durch die Hüllbereiche können Kollisionen rechtzeitig und unter Einbeziehung der erforderlichen Reaktionszeiten bzw. Verarbeitungsverzögerungen erfasst werden. Außerdem ist die Generierung eines Vorwarnbereichs durch gezielte Ausdehnung von einer oder mehreren Hüllbereichen in Bewegungsrichtung möglich.

Mit der Sicherheitseinrichtung kann permanent die räumliche Position und eine eventuelle Bewegung des Werkers erfasst und auf Kollisionen oder auf Kollisionsgefahren überwacht werden. Dies ist für alle Arten von Werkern und deren Tätigkeiten von Vorteil. Besondere Vorteile bestehen bei einem Prozessbeobachter.

Die Signalisierung von Kollisionen oder Kollisionsgefahren kann auf unterschiedliche Weise erfolgen. Von besonderem Vorteil ist eine direkte Rückmeldung an den Werker, was auf unterschiedliche Weise erfolgen kann. Erfindungsgemäß erfolgt eine körperspezifische Rückmeldung, die dem Werker auch das betroffene Körperteil signalisiert. Hierfür ist der modulare Aufbau der Erfassungseinrichtung und die Zuordnung der Erfassungsmodule zu mehreren relevanten Körperteilen, insbesondere Gliedmaßen, von Vorteil. Eine Rückmeldung kann insbesondere durch eine Vibration des Erfassungsmoduls erfolgen, was in Anbetracht des Arbeitsumfelds für den Werker besonders sicher und eindeutig bemerkbar ist. Er weiß dabei auch sofort und intuitiv, welches Körperteil betroffen ist.

Die Anordnung der Erfassungsmodule am Körper des Werkers kann mit einer geeigneten Trageeinrichtung erfolgen, die in unterschiedlicher Weise ausgebildet sein kann, z.B. als Gurtsystem, als Weste oder dergleichen. Besondere Vorteile bietet ein Sicherheitsanzug, insbesondere ein Overall, der auch sonstige Sicherheitsanforderungen erfüllt und der insbesondere an spezifischen Körperstellen Aufnahmen für ein Erfassungsmodul haben kann. Er erleichtert auch die Unterbringung einer geeigneten Energieversorgung nebst Leitungsnetzwerk.

Der Sicherheitsanzug, insbesondere Overall, hat eigenständige erfinderische Bedeutung. Der Sicherheitsanzug weist eine oder mehrere bevorzugt taschenartige Aufnahmen für oder mit einer Erfassungseinrichtung zur Lokalisierung des Werkers auf. Der Sicherheitsanzug hat insbesondere mehrere im Bereich der Körpergliedmaßen angeordnete Aufnahmen für jeweils ein Erfassungsmodul und ggf. eine Aufnahme für eine Energieversorgung. Die Aufnahmen können offen oder verschlossen sein, insbesondere können die Erfassungsmodule in vorbereitete taschenförmige Aufnahmen eingenäht sein.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Arbeitsvorrichtung mit einem Roboter, einem Werker und einer Sicherheitseinrichtung,
- Figur 2:: eine schematische Darstellung der Sicherheitseinrichtung und ihrer Erfassungseinrichtung mit Körperbezug,
- Figur 3:: eine schematische Darstellung eines Personen-Sicherheits-Skeletts und
- Figur 4:: eine schematische Darstellung einer Auswerte- und Steuereinrichtung.

Die Erfindung betrifft eine Sicherheitseinrichtung (4) und ein Sicherheitsverfahren für einen Werker (3) im Arbeitsbereich von bewegten automatischen Maschinen (2), insbesondere Industrierobotern. Die Erfindung betrifft ferner eine mit einer solchen Sicherheitseinrichtung (4) ausgerichtete Arbeitsvorrichtung (1), z.B. eine Roboterstation.

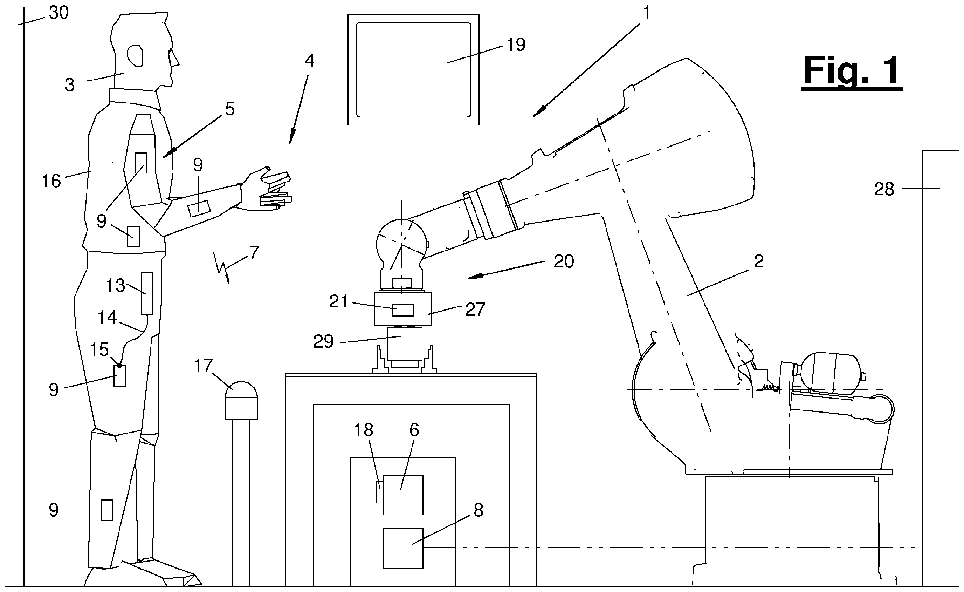

Figur 1 zeigt in schematischer Darstellung eine solche Arbeitsvorrichtung (1) in Form einer Roboterstation. Die bewegte automatische Maschine ist hier als Industrieroboter (2) ausgebildet, der mehrere angetriebene und mehrere beweglich, insbesondere gelenkig, miteinander verbundene Glieder aufweist und der mit einer Robotersteuerung (28) verbunden ist.

Der Industrieroboter (2) kann eine beliebige Zahl und Kombination von rotatorischen und/oder translatorischen Roboterachsen haben. Er kann gemäß Figur 1 z.B. als Gelenk- bzw. Knickarmroboter mit fünf oder mehr Roboterachsen ausgebildet sein. Der Industrieroboter (2) kann positionsgesteuerte bzw. -geregelte Roboterachsen haben. Er kann alternativ als taktiler und für MRK geeigneter Industrieroboter mit nachgiebigen kraftgesteuerten bzw. -geregelten Roboterachsen ausgebildet sein. Auch eine kombinierte Positions- und Kraftsteuerung bzw. -regelung der Roboterachsen ist möglich.

An seinem Abtriebsglied, z.B. einer mehrachsigen Roboterhand, trägt der Industrieroboter (2) ein Roboterwerkzeug (27), mit dem ein Werkstück (29) auf einer Auflage oder dergleichen bearbeitet wird. Der Industrieroboter (2) hat einen Arbeitsbereich, in dem Kollisionen mit einem in Figur 1 dargestellten Werker (3) auftreten können. Der Werker (3) ist z.B. ein Prozessbeobachter, der lediglich den vom Roboter (2) ausgeführten Arbeitsprozess beobachtet. Er kann gegebenenfalls auch flankierende Prozesstätigkeiten, wie ein Zuführen oder Prüfen von Werkstücken (29) oder dergleichen ausführen.

In der Arbeitsvorrichtung (1) können auch mehrere Industrieroboter (2) angeordnet sein. Die Arbeitsvorrichtung (1) kann von einer Schutzvorrichtung (30) umgeben sein, die z.B. als Zaun ausgebildet ist und eine Zugangsöffnung für den Werker (3) aufweist.

In den Ausführungsbeispielen ist ein Industrieroboter (2) dargestellt und beschrieben. Alternativ oder zusätzlich kann eine andere bewegte automatische Maschine mit einem evtl. kollisionsgefährdeten Arbeitsbereich, z.B. eine Ladevorrichtung, eine den Prozess unterstützende Hilfsvorrichtung, eine Transportvorrichtung, eine Bearbeitungsmaschine oder dgl. vorhanden sein. Die Bewegungen und Positionen einer solchen bewegten automatischen Maschine können in geeigneter Weise, z.B. optisch, detektiert werden. Die Beschreibungen und Erläuterungen zum Industrieroboter (2) gelten entsprechend auch für andere bewegte Maschinen.

Die Sicherheitseinrichtung (4) weist eine mobile Erfassungseinrichtung (5) auf, die vom Werker (3) getragen wird und die zur Lokalisierung des Werkers (3) dient. Der Werker (3) kann die Erfassungseinrichtung (5) insbesondere direkt an seinem Körper tragen, wobei er die Hände frei hat für andere Tätigkeiten. Unter dem Begriff eines Tragens wird jegliche Art von Mitführung und Zuordnung der Erfassungseinrichtung zum Werker (3) und seinem Körper verstanden.

Die Sicherheitseinrichtung (4) weist ferner eine Auswerte-und Steuereinrichtung (6) auf, die mit der Erfassungseinrichtung (5) in einer Kommunikationsverbindung (7) steht. Dies ist bevorzugt eine drahtlose Kommunikationsverbindung (7), insbesondere eine Funkverbindung. Die Erfassungseinrichtung (5) und die Auswerte- und Steuereinrichtung (6) haben hierfür entsprechende Kommunikationseinheiten (11,18). Die Kommunikationsverbindung (7) kann unidirektional oder bidirektional sein. Insbesondere werden von der Erfassungseinrichtung (5) die Lokalisierungsdaten an die Auswerte- und Steuereinrichtung (6) übermittelt.

Die Auswerte- und Steuereinrichtung (6) kann stationär angeordnet sein. Sie befindet sich innerhalb des Kommunikationsbereichs.

Die Sicherheitseinrichtung (4) weist ferner eine Schnittstelle (8) auf, mittels der Daten über den aktuellen Gefahrenbereich des Industrieroboters (2) und/oder einer anderen bewegten Maschine aufgenommen und in der Auswerte- und Steuereinrichtung (6) verarbeitet werden können. Diese Daten können von einer Detektionseinrichtung (20) stammen, die gegebenenfalls Bestandteil der Sicherheitseinrichtung (4) sein kann oder die auch der Arbeitsvorrichtung (1) zugeordnet sein kann. Eine andere Eingabemöglichkeit besteht über eine Datenverbindung mit der Robotersteuerung (28) und/oder einer anderen Maschinensteuerung. Über die Erfassung der Daten über den aktuellen Gefahrenbereich wird nachstehend noch näher eingegangen. Die Schnittstelle (8) kann an die Auswerte- und Steuereinrichtung (6) angeschlossen oder in diese integriert sein.

Die Auswerte- und Steuereinrichtung (6) kann die Daten der Erfassungseinrichtung (5) und die vorerwähnten Daten über den aktuellen Gefahrenbereich des Industrieroboters (2) vergleichen und hieraus eine bestehende oder drohende Kollision von Werker (3) und Industrieroboter (2) detektieren. Bevorzugt geht es um die vorbeugende Detektion von drohenden Kollisionen.

Auf Grund des Detektionsergebnisses können weitere Reaktionen oder Prozesse ausgelöst werden. Insbesondere kann die Auswerte- und Steuereinrichtung (6) ein Warnsignal ausgeben. Sie kann hierfür z.B. mit einer Anzeige (19), z.B. einem in Figur 1 dargestelltem Monitor, verbunden sein. Sie kann andererseits auch über die Schnittstelle (8) und die Verbindung mit der Robotersteuerung (28) einen Nothalt des Roboters (2) auslösen. Alternativ oder zusätzlich kann sie auch erfindungsgemäß ein Warnsignal an den Werker (3) übermitteln. Die Warnsignale sind jeweils körperspezifisch und signalisieren dem Werker das kollisionsgefährdete Körperteil. Hierauf wird nachfolgend näher eingegangen.

Die Sicherheitseinrichtung (4) erfasst die räumliche Position und eine eventuelle Bewegung des Werkers (3) und kommuniziert dies an die Auswerte- und Steuereinrichtung

(6). Diese wertet die Daten zur erwähnten Gefahrenanalyse aus. Die Positions- und Bewegungserfassung ist körperspezifisch und erfolgt an mehreren Körperstellen des Werkers (3). Insbesondere können dabei besonders kollisionsträchtige Körperteile, insbesondere die Gliedmaßen (Arme und Beine) erfasst werden.

Die Sicherheitseinrichtung (4) weist ferner eine Referenzeinrichtung (17) für die Referenzierung der Erfassungseinrichtung (5) auf. Hierüber kann einerseits eine Erkennung der Anwesenheit eines Werkers (3) und einer Erfassungseinrichtung (5) und eine entsprechende Initialisierung der Auswerte- und Steuereinrichtung (6) veranlasst werden. Andererseits kann hierüber auch die Erfassungseinrichtung (5) referenziert werden.

Die Erfassungseinrichtung (5) weist vorzugsweise mehrere mobile Erfassungsmodule (9) auf. Diese sind mehreren relevanten Körperteilen des Werkers (3), insbesondere den vorerwähnten Gliedmaßen, zugeordnet. Sie nehmen die räumliche Position und eventuelle Bewegungen des betreffenden Körperteils auf.

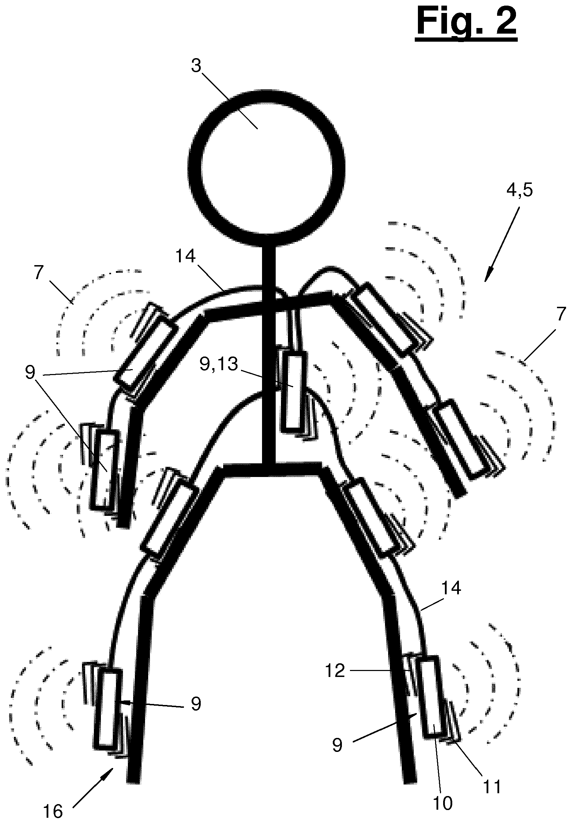

Wie Figur 1 und 2 verdeutlichen, hat die Erfassungseinrichtung (5) neun mobile Erfassungsmodule (9), die den beiden Unter- und Oberarmen sowie den beiden Unter- und Oberschenkeln und dem Torso des Werkers (3) zugeordnet sind. Eine oder mehrere weitere mobile Erfassungsmodule (9) können auch anderen Körperteilen, z.B. den Händen, dem Kopf oder dergleichen zugeordnet sein. In einer Abwandlung von Figur 1 und 2 können nur acht Erfassungsmodule (9) vorhanden sein, wobei auf eine Modulzuordnung zum Torso oder einem anderen Körperteil verzichtet wird. Ferner ist es möglich, jedem Arm und Bein jeweils nur ein mobiles Erfassungsmodul (9) an geeigneter Stelle zuzuordnen. Ein oder mehrere weitere mobile Erfassungsmodule (9) können am Torso und/oder an anderen Körperstellen angeordnet sein. Daneben gibt es weitere beliebige Mischformen.

Die Erfassungsmodule (9) werden bevorzugt am Körper getragen. Hierfür ist eine geeignete Trageinrichtung (16) vorgesehen, die an den Körper angepasst sein kann und die eine gezielte Zuordnung der Erfassungsmodule (9) zu den jeweils gewünschten Körperteilen ermöglicht. Die Erfassungsmodule (9) können einzeln am Körper mit Bändern oder dgl. befestigt und getragen werden. Bevorzugt ist die Trageinrichtung (16) für eine gruppenweise oder insgesamte Unterbringung der Erfassungsmodule (9) ausgebildet.

Im gezeigten Ausführungsbeispiel ist die Trageinrichtung (16) als Sicherheitsanzug, insbesondere als Overall, ausgebildet. Der Sicherheitsanzug (16), insbesondere Overall, hat eigenständige erfinderische Bedeutung.

Die Trageinrichtung (16), insbesondere der Sicherheitsanzug, kann für jedes Erfassungsmodul (9) eine Aufnahme aufweisen, z.B. eine Anzugtasche, welche die gewünschte Körperteilzuordnung ermöglicht und ein störungsfreies Mitnehmen des Erfassungsmoduls (9) erlaubt. Die Aufnahmen können offen oder verschlossen sein, insbesondere können die Erfassungsmodule (9) in vorbereitete taschenförmige Aufnahmen eingenäht sein.

Die Erfassungsmodule (9) können jeweils eine eigene und mitgeführte Energieversorgung, insbesondere eine Batterie, aufweisen. Im gezeigten und bevorzugten Ausführungsbeispiel ist eine separate Energieversorgung (13) vorgesehen, die z.B. als Batterie mit höherer Kapazität ausgebildet ist und die mit den verschiedenen Erfassungsmodulen (9) über Leitungen (14) verbunden ist. Diese Verbindung kann lösbar sein, wobei z.B. Druckknöpfe (15) an den Leitungsenden und den Erfassungsmodulen (9) sowie an der Energieversorgung (13) angeordnet sind.

Die Erfassungsmodule (9) weisen jeweils eine uni- oder bidirektionale Kommunikationseinheit (11), insbesondere eine Funkeinheit, für die Kommunikation mit der Auswerte-und Steuereinrichtung (6) und deren Kommunikationseinheit (18) auf. Statt einer Funkverbindung (7) sind andere drahtlose Kommunikationsverbindungen möglich, z.B. per Infrarot, Ultraschall oder dergleichen. Auch eine leitungsgebundene Kommunikationsverbindung (7) ist möglich.

Die Signalisierung kann mit der Erfassungseinrichtung (5) gekoppelt sein. Die Erfassungsmodule (9) weisen vorzugsweise jeweils eine Signaleinheit (12) zur Signalisierung einer Kollision oder Kollisionsgefahr an den Werker (3) auf. Eine solche Signaleinheit (12) ist vorzugsweise als haptische oder taktile Einheit, insbesondere als Vibrationseinheit, ausgebildet. Ein Vibrationssignal kann vom Werker (3) zuverlässig und unterscheidungssicher trotz schwieriger Umgebungs- und Arbeitsbedingungen aufgenommen werden und in seinem Bedeutungsinhalt verstanden werden. Das jeweilige Erfassungsmodul (9) ist hierfür hautnah in einer geeigneten, z.B. taschenartigen Aufnahme der Trageinrichtung (16), insbesondere des Sicherheitsanzugs, untergebracht.

Durch die erwähnte bidirektionale Kommunikationsverbindung (7) kann die Auswerte- und Steuereinrichtung (6) gezielt die Signaleinheit (12) des Erfassungsmoduls (9) an dem von der Kollisionsgefahr betroffenen Körperteil ansprechen. Dieser modulare Aufbau der Erfassungseinrichtung (5) und die gezielte Körperteilansprache erlaubt es dem Werker (3) intuitiv, gezielt und richtig zu reagieren und die drohende Kollision zu vermeiden, z.B. durch eine Ausweichbewegung, insbesondere ein Rückziehen des betroffenen Körperteils.

Alternativ oder zusätzlich kann die Signaleinheit (12) in anderer Weise ausgebildet sein und eine andere Art von Warnsignal emittieren. Möglich ist z.B. eine optische und/oder akustische Ausbildung, z.B. als Blinker, Hupe oder dgl.. Eine Signalisierung ist auch auf elektrischem weg, z.B. mit einem elektrischen Impuls, wie bei einem Elektroschock möglich.

In einer anderen Ausführungsform kann die Signaleinheit (12) nur an einem Erfassungsmodul (9) vorhanden sein und ohne nähere Spezifikation eines Körperteils eine allgemeine Kollisionsgefahr signalisieren. In einer weiteren Abwandlung kann auf eine Signaleinheit (12) an der Erfassungseinrichtung (5) verzichtet werden.

Eine Signaleinrichtung der Sicherheitseinrichtung (4) zur Abgabe von Warnsignalen im Kollisions- oder Gefahrenfall kann die vorgenannte Anzeige (19) und/oder eine Signaleinheit (12) ggf. in Mehrfachanordnung beinhalten.

Das Warnsignal, insbesondere das Vibrationssignal, kann eine Signalintensität bzw. Signalstärke aufweisen, die abhängig von der Entfernung zwischen Werker und Maschine ist. Sie ist umso höher, je kleiner die Entfernung und je größer die Kollisionsgefahr ist.

Die Erfassungsmodule (9) weisen jeweils einen Sensor (10) für die Erfassung der räumlichen Position und einer evtl. Bewegung des zugeordneten Körperteils auf. Ein solcher Sensor (10) kann in unterschiedlicher Weise ausgebildet sein. Er kann auch mehrfach vorhanden sein. Im gezeigten und bevorzugten Ausführungsbeispiel ist der Sensor (10) als Inertialsensor ausgebildet. Ein derartiger Sensor basiert auf Trägheit. Er kann z.B. einen inertialen Beschleunigungsmesser und/oder ein Inertialgyroskop oder eine Kombination von beiden beinhalten. Alternativ sind andere geeignete Sensoren (10) zur dreidimensionalen Positionserfassung und zur räumlichen Bewegungserfassung möglich. Der Sensor (10) ist zur Signalübermittlung mit der Kommunikationseinheit (11) verbunden.

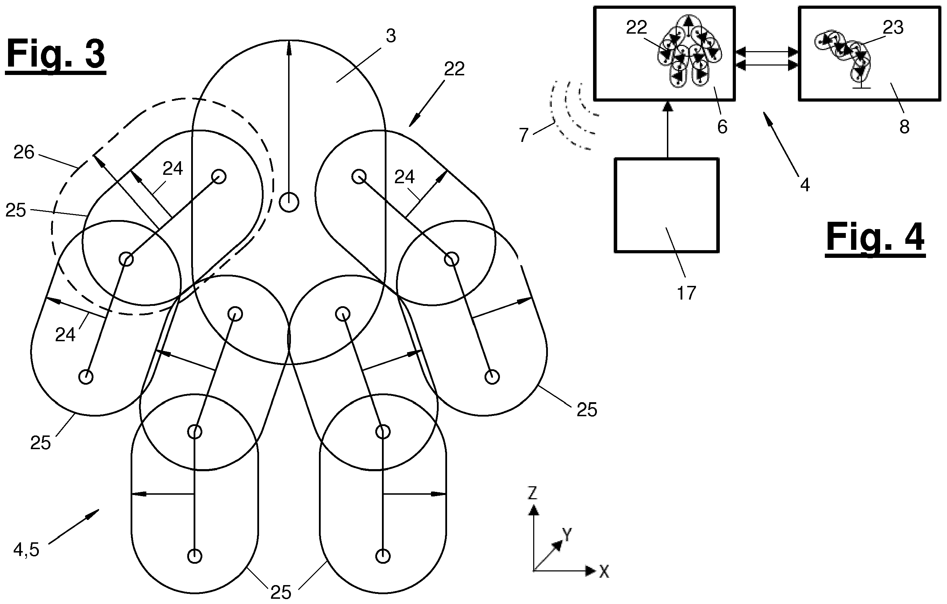

Die Auswerte- und Steuereinrichtung (6) beinhaltet eine Recheneinheit und Speicher für ein oder mehrere Programme, Daten oder dergleichen. Ferner sind Eingabe- und Ausgabeschnittstellen für Daten vorhanden. Eine solche Verbindung besteht zur erwähnten Schnittstelle (8), zur Referenzeinrichtung (17) und ggf. zur Anzeige (19). Die Auswerte- und Steuereinrichtung (6) weist ein Programm zur Erstellung eines Personen-Sicherheits-Skeletts (22) auf. Dieses wird auch als Human-Safety-Skelett oder abgekürzt als PSS oder HSS bezeichnet. Es wird aus den übermittelten Daten der Erfassungseinrichtung (5) und insbesondere der Erfassungsmodule (9) erstellt. Das PSS (22) ist virtuell und bildet die Körperteile, insbesondere den Torso und die Gliedmaßen, d.h. Arme und Beine, ab. Die Skelettaufteilung kann entsprechend der Aufteilung und Anordnung der Erfassungsmodule (9) gewählt werden. Figur 3 zeigt eine Variante mit Torso sowie beidseitigen Unter- und Oberarmen sowie Unter- und Oberschenkeln. Die Skelettglieder sind z.B. durch Ihre Gelenkverbindungen und Verbindungslinien symbolisiert.

Das PSS (22) stellt ein virtuelles Körpermodell des Werkers (3) dar. Es kann zugleich die Anordnung und Verteilung der Erfassungsmodule (9) symbolisieren. Das PSS hat außerdem zu jedem relevanten Körperteil, insbesondere Glied, einen virtuellen Hüllbereich (25) mit einem Sicherheitsabstand zu dem betreffenden Kernbereich des Glieds. Das PSS weist ferner an mindestens einem, vorzugsweise allen Modellgliedern eine oder mehrere räumliche Vektoren (24) auf, welche die Bewegung des jeweils erfassten Körperteils symbolisieren. Das PSS, insbesondere die Außenhaut der Hüllbereiche (25) und die Vektoren (24) werden zur Gefahrenanalyse und zur Vorausberechnung evtl. Kollisionen mit dem Industrieroboter (2) herangezogen. Die Vektoren (24) und auch die in der Beschreibung vorerwähnten räumlichen Bewegungen des Körperteils betreffen die Richtung und die Geschwindigkeit sowie ggf. die Beschleunigung der Bewegung. Diese Daten werden auch entsprechend von dem jeweiligen Sensor (10) erfasst.

Das PSS (22) kann ferner an ein oder mehreren Gliedern des Körpermodels einen in Bewegungsrichtung (Vektor (24)) erweiterten Vorwarnbereich (26) für das betreffende Glied bzw. Körperteil aufweisen. Dieser Vorwarnbereich (26) geht über den Hüllbereich (25) hinaus.

Der Hüllbereich (25) kann in einer Variante die tatsächlichen Abmessungen des betreffenden Glieds oder Körperteils repräsentieren. In einer anderen Ausführung kann der Hüllbereich (25) über die tatsächlichen Abmessungen hinaus um einen gewissen Sicherheitsabstand erweitert oder vergrößert sein. Der Sicherheitsabstand kann der Kompensation von Rechen- oder Reaktionszeiten oder sonstigen Verzögerung bei einer angemessenen Reaktion auf eine bestehende oder drohende Kollisionsgefahr dienen. Der besagte Vorwarnbereich (26) kann noch weiter hinausgeschoben sein und kann eine stärkere Vorfelderfassung beinhalten. Durch rechnerische Projektion der aktuellen Ruhelage oder der Bewegung des betreffenden Körperteils kann vorausschauend ermittelt werden, ob auf diesem Bewegungsweg in näherer Zukunft eine Kollision mit dem ggf. bewegten Industrieroboter (2) stattfinden kann.

Die Auswerte- und Steuereinrichtung (6) kann auch ein Programm zur Erstellung eines Personen-Sicherheits-Skeletts (23), abgekürzt MSS, aufweisen. Ein anderweitig erstelltes MSS kann alternativ über die Schnittstelle (8) an die Auswerte- und Steuereinrichtung (6) übermittelt werden.

Die aktuelle Lage und die Verlagerungsbewegung des Industrieroboters (2) wird aus dem MSS rechnerisch ermittelt, wobei diese Ermittlung auch für die Roboterglieder einzeln bzw. mit spezifischer Berücksichtung von potenziellen Gefährdungsstellen des Roboters (2) bei der aktuellen Bewegung erfolgen kann. Position und Bewegung des Werkers (3) und seiner Körperteile sowie die Positionen und Bewegungen des Industrieroboters (2) und seiner Körperteile werden permanent bzw. mit einem hochfrequenten Takt erfasst und verarbeitet.

Diese Positions- und Bewegungsdaten des Industrieroboters (2) und/oder einer anderen bewegten Maschine können in unterschiedlicher Weise generiert werden. Einerseits kann hierfür die vorerwähnte Detektionseinrichtung (20) eingesetzt werden. Diese kann stationär oder instationär ausgebildet sein. Sie kann ferner eine modulare Ausbildung besitzen und ein oder mehrere Detektionsmodule (21) aufweisen.

Eine stationäre Detektionseinrichtung (20) kann z.B. eine optische Erfassungseinrichtung, insbesondere ein Kamerasystem, sein. In der gezeigten Ausführungsform ist die Detektionseinrichtung (20) ähnlich wie die Erfassungseinrichtung (5) aufgebaut, wobei das Detektionsmodul (21) eine gleiche oder ähnliche Ausbildung wie ein Erfassungsmodul (9) haben kann und zumindest einen solchen Sensor (10) und eine bevorzugt drahtlos und uni-oder bidirektional kommunizierende Kommunikationseinheit (11) aufweist. Die Schnittstelle (8) kann eine entsprechende Kommunikationseinheit haben. Alternativ kann die vorhandene Kommunikationseinheit (18) der Auswerte-und Steuereinrichtung (6) benutzt werden.

In Figur 1 ist ein einzelnes Detektionsmodul (21) am Roboterwerkzeug (27) angeordnet. Ein oder mehrere weitere Detektionsmodule (21) können an ein oder mehreren Robotergliedern angeordnet sein. Das MSS (23) kann dann in gleicher Weise wie das vorbeschriebene PSS (22) ausgebildet und generiert werden. Entsprechende oder andere Detektionsmodule (21) können auch bei einer anderen bewegten Maschine eingesetzt werden.

In weiterer Abwandlung können Positions- und Bewegungsdaten des Industrieroboters (2) und seiner Glieder von der Robotersteuerung (28) über eine bidirektionale Kommunikationsverbindung und die Schnittstelle (8) übermittelt werden. Aus diesen Daten kann ebenfalls das MSS (23) unter Einbeziehung der Roboterabmessung erstellt werden. Ferner sind Mischformen aus Roboterdaten von der Robotersteuerung (28) und einer Detektionseinrichtung (20) mit ein oder mehreren Detektionsmodulen (21) möglich. Entsprechendes gilt für Steuerungen von anderen bewegten Maschinen.

Der Industrieroboter (2) oder die eingangserwähnte andere bewegte automatische Maschine kann beliebige Prozesse durchführen. Dies kann ein Fügeprozess, z.B. ein Schweißen, Löten, Kleben oder dergleichen sein. Ferner sind Handhabungs- oder Montageprozesse, Auftragprozesse oder dergleichen möglich.

Abwandlungen der gezeigten oder beschriebenen Ausführungsformen sind in verschiedener Weise möglich. Insbesondere können die Merkmale der vorstehenden Ausführungsbeispiele und ihrer Abwandlungen beliebig miteinander kombiniert und ggf. auch vertauscht werden.

Die Sicherheitseinrichtung (4) bzw. die Signaleinrichtung kann alternativ oder zusätzlich in anderer Weise ausgebildet sein und funktionieren. Sie kann z.B. in der vorerwähnten Weise im Gefahrenfall ein Warnsignal mittels einer Anzeige (19) akustisch und/optisch, z.B. auf einem in Figur 1 dargestellten Monitor, emittieren. Das Warnsignal ist ebenfalls körperspezifisch und signalisiert dem Werker das kollisionsgefährdete Körperteil. Ferner kann die Signaleinrichtung (31) ein mechanisches Warnmittel, z.B. eine Schranke, aktivieren.

### BEZUGSZEICHENLISTE

- 1: Arbeitsvorrichtung, Roboterstation
- 2: automatische Maschine, Industrieroboter
- 3: Werker, Prozessbeobachter
- 4: Sicherheitseinrichtung
- 5: Erfassungseinrichtung, Sensoreinrichtung
- 6: Auswerte- und Steuereinrichtung
- 7: Kommunikationsverbindung, Funkverbindung
- 8: Schnittstelle
- 9: Erfassungsmodul, Gliedmaßenmodul
- 10: Sensor, Inertialsensor
- 11: Kommunikationseinheit
- 12: Signaleinheit, Vibrationseinheit
- 13: Energieversorgung, Batterie
- 14: Leitung
- 15: Druckknopf
- 16: Trageinrichtung, Sicherheitsanzug
- 17: Referenzeinrichtung, Referenzsensor
- 18: Kommunikationseinheit
- 19: Anzeige, Monitor
- 20: Detektionseinrichtung für Gefahrenbereich
- 21: Detektionsmodul
- 22: Personen-Sicherheits-Skelett, PSS
- 23: Maschinen-Sicherheits-Skelett, MSS
- 24: Vektor
- 25: Hüllbereich, Warnbereich
- 26: Vorwarnbereich
- 27: Roboterwerkzeug
- 28: Robotersteuerung
- 29: Werkstück
- 30: Schutzvorrichtung, Zaun

## Patentansprüche

1. Sicherheitseinrichtung für Werker (3) im Arbeitsbereich von bewegten automatischen Maschinen (2), insbesondere Industrierobotern, wobei die Sicherheitseinrichtung (4) permanent die räumliche Position und eine eventuelle Bewegung des Werkers erfasst und auf Kollisionen oder auf Kollisionsgefahren überwacht und eine mobile und vom Werker (3) zu tragende Erfassungseinrichtung (5) zur Lokalisierung des Werkers (3) sowie eine Auswerte-und Steuereinrichtung (6) aufweist, wobei die Einrichtungen (5,6) in einer bevorzugt drahtlosen Kommunikationsverbindung stehen und die Auswerte-und Steuereinrichtung (6) auch eine Schnittstelle (8) für die Eingabe von Daten über den aktuellen Gefahrenbereich der automatischen Maschine (2), insbesondere des Industrieroboters, aufweist, **dadurch gekennzeichnet, dass** die Sicherheitseinrichtung (4) bei einer Kollision oder Kollisionsgefahr ein Warnsignal an den Werker (3) übermittelt, wobei die Sicherheitseinrichtung (4) dem Werker (3) eine körperspezifische Rückmeldung gibt und das betroffene Körperteil signalisiert.

2. Sicherheitseinrichtung nach Anspruch 1, **dadurch gekennzeichnet, dass** das Warnsignal eine Signalintensität bzw. Signalstärke aufweist, die abhängig von der Entfernung zwischen Werker und bewegter Maschine (2) ist und insbesondere umso höher ist, je kleiner die Entfernung und je größer die Kollisionsgefahr ist.

3. Sicherheitseinrichtung nach Anspruch 1 oder 2, **dadurch gekennzeichnet, dass** die Erfassungseinrichtung (5) die räumliche Position und evtl. Bewegungen des Werkers (3) erfasst und an die Auswerte- und Steuereinrichtung (6) kommuniziert, wobei die Auswerte- und Steuereinrichtung (6) die Daten der Erfassungseinrichtung (5) und die Daten über den aktuellen Gefahrenbereich der automatischen Maschine (2), insbesondere des Industrieroboters, vergleicht und eine bestehende oder drohende Kollision von Werker (3) und automatischer Maschine (2), insbesondere Industrieroboter, detektiert und bei detektierter Kollision oder Kollisionsgefahr ein Warnsignal über eine Signaleinheit (12) oder eine Anzeige (19) ausgibt.

4. Sicherheitseinrichtung nach Anspruch 1, 2 oder 3, **dadurch gekennzeichnet, dass** die Erfassungseinrichtung (5) mehrere mobile Erfassungsmodule (9) aufweist, die mehreren relevanten Körperteilen, insbesondere Gliedmaßen, des Werkers (3) zuordenbar sind und die räumliche Position und evtl. Bewegungen des betreffenden Körperteils aufnehmen.

5. Sicherheitseinrichtung nach einem der vorhergehenden Ansprüche, **dadurch gekennzeichnet, dass** ein Erfassungsmodul (9) eine Signaleinheit (12) zur Signalisierung einer Kollision oder Kollisionsgefahr an den Werker (3) aufweist, wobei die Signaleinheit (12) bevorzugt als haptische oder taktile Einheit, insbesondere als Vibrationseinheit, oder als optische und/oder akustische Einheit ausgebildet ist.

6. Sicherheitseinrichtung nach einem der vorhergehenden Ansprüche, **dadurch gekennzeichnet, dass** die Erfassungsmodule (9) jeweils einen Sensor (10), insbesondere einen Inertialsensor, für die Erfassung der räumliche Position und evtl. Bewegungen des betreffenden Körperteils aufweisen.

7. Sicherheitseinrichtung nach einem der vorhergehenden Ansprüche, **dadurch gekennzeichnet, dass** die Sicherheitseinrichtung (4) eine am Körper tragbare Trageinrichtung (16), insbesondere einen Sicherheitsanzug, für die Erfassungseinrichtung (5), insbesondere für die Erfassungsmodule (9) und ggf. eine Energieversorgung (13), aufweist.

8. Sicherheitseinrichtung nach einem der vorhergehenden Ansprüche, **dadurch gekennzeichnet, dass** die Auswerte- und Steuereinrichtung (6) eine Recheneinheit und ein Programm zur Erstellung eines Personen-Sicherheits-Skeletts (22) aus den Daten der Erfassungseinrichtung (5) und ein Programm zur Erstellung eines Maschinen-Sicherheits-Skeletts (23) aus den erhaltenen Daten über den aktuellen Gefahrenbereich der automatischen Maschine (2), insbesondere des Industrieroboters, aufweist.

9. Arbeitsvorrichtung mit einer bewegten automatischen Maschine (2), insbesondere einem Industrieroboter, **dadurch gekennzeichnet, dass** die Arbeitsvorrichtung (1) eine Sicherheitseinrichtung (4) für Werker (3) aufweist, die nach mindestens einem der Ansprüche 1 bis 8 ausgebildet ist.

10. Sicherheitsverfahren für Werker (3) im Arbeitsbereich von bewegten automatischen Maschinen (2), insbesondere Industrierobotern, wobei mit einer Sicherheitseinrichtung (4) permanent die räumliche Position und eine eventuelle Bewegung des Werkers erfasst und auf Kollisionen oder auf Kollisionsgefahren überwacht wird, wobei die Sicherheitseinrichtung (4) eine mobile und vom Werker (3) getragene Erfassungseinrichtung (5) zur Lokalisierung des Werkers (3) sowie eine Auswerte-und Steuereinrichtung (6) aufweist, wobei die Einrichtungen (5,6) in einer bevorzugt drahtlosen Kommunikationsverbindung stehen und die Auswerte-und Steuereinrichtung (6) auch eine Schnittstelle (8) für die Eingabe von Daten über den aktuellen Gefahrenbereich der automatischen Maschine (2), insbesondere des Industrieroboters, aufweist, **dadurch gekennzeichnet, dass** bei einer Kollision oder Kollisionsgefahr ein Warnsignal an den Werker (3) übermittelt wird, wobei bei einer Kollision oder Kollisionsgefahr dem Werker (3) eine körperspezifische Rückmeldung gegeben und das betroffene Körperteil signalisiert wird.

11. Sicherheitsverfahren nach Anspruch 10, **dadurch gekennzeichnet, dass** mittels einer modularen Erfassungseinrichtung (5) die räumlichen Positionen und ggf. die Bewegungen einzelner relevanter Körperteile des Werkers (3) gezielt erfasst und zur Kollisions- und Gefahrenanalyse herangezogen werden.

12. Sicherheitsverfahren nach Anspruch 10 oder 11, **dadurch gekennzeichnet, dass** die Erfassungseinrichtung (5), insbesondere deren Erfassungsmodule (9), direkt am Körper des Werkers (3) getragen und den relevanten Körperteilen zugeordnet wird, wobei bei einer Kollision oder Kollisionsgefahr dem Werker (3) ein Warnsignal durch eine haptische oder taktile Signaleinheit (12) eines Erfassungsmoduls (9) übermittelt wird.

13. Sicherheitsverfahren nach einem der Ansprüche 10 bis 12, **dadurch gekennzeichnet, dass** aus erfassten körperspezifischen Daten des Werkers (3) ein virtuelles Personen-Sicherheits-Skelett (22) erstellt und für die Kollisions- und Gefahrenanalyse herangezogen wird, wobei die Skelettteile, insbesondere die Gliedmaßen, von einem virtuellen Hüllbereich (25) mit einem Sicherheitsabstand umgeben werden, der in einem Rechenmodell auf eine eventuelle Kollision mit einer automatischen Maschine (2) überprüft wird.

14. Sicherheitsverfahren nach einem der Ansprüche 10 bis 13, **dadurch gekennzeichnet, dass** die bewegte Maschine (2) mit ein oder mehreren Bewegungsvektoren und Hüllbereichen (25) symbolisiert wird, wobei durch die Hüllbereiche (25) Kollisionen rechtzeitig und unter Einbeziehung der erforderlichen Reaktionszeiten bzw. Verarbeitungsverzögerungen erfasst werden.

15. Sicherheitsverfahren nach einem der Ansprüche 10 bis 14, **dadurch gekennzeichnet, dass** ein Vorwarnbereich durch gezielte Ausdehnung von einem oder mehreren Hüllbereichen (25) in Bewegungsrichtung generiert wird.

## Claims

1. Safety device for workers (3) in the working area of moving automatic machines (2), in particular industrial robots, wherein the safety device (4) permanently captures the spatial position and a possible movement of the worker and monitors for collisions or risks of collision and has a mobile capture device (5), which is to be worn by the worker (3) and is intended to locate the worker (3), and an evaluation and control device (6), wherein the devices (5, 6) have a preferably wireless communication connection, and the evaluation and control device (6) also has an interface (8) for inputting data relating to the current hazardous area of the automatic machine (2), in particular the industrial robot, **characterized in that**, in the event of a collision or a risk of collision, the safety device (4) transmits a warning signal to the worker (3), wherein the safety device (4) provides the worker (3) with body-specific feedback and signals the affected body part.

2. Safety device according to Claim 1, **characterized in that** the warning signal has a signal intensity or signal strength which is dependent on the distance between the worker and the moving machine (2) and, in particular, is higher, the shorter the distance and the greater the risk of collision.

3. Safety device according to Claim 1 or 2, **characterized in that** the capture device (5) captures the spatial position and possibly movements of the worker (3) and communicates them to the evaluation and control device (6), wherein the evaluation and control device (6) compares the data from the capture device (5) and the data relating to the current hazardous area of the automatic machine (2), in particular the industrial robot, and detects an existing or imminent collision of the worker (3) and the automatic machine (2), in particular the industrial robot, and outputs a warning signal via a signal unit (12) or a display (19) if a collision or a risk of collision is detected.

4. Safety device according to Claim 1, 2 or 3, **characterized in that** the capture device (5) has a plurality of mobile capture modules (9) which can be assigned to a plurality of relevant body parts, in particular limbs, of the worker (3) and record the spatial position and possibly movements of the relevant body part.

5. Safety device according to one of the preceding claims, **characterized in that** a capture module (9) has a signal unit (12) for signalling a collision or a risk of collision to the worker (3), wherein the signal unit (12) is preferably in the form of a haptic or tactile unit, in particular a vibration unit, or in the form of an optical and/or acoustic unit.

6. Safety device according to one of the preceding claims, **characterized in that** the capture modules (9) each have a sensor (10), in particular an inertial sensor, for capturing the spatial position and possibly movements of the relevant body part.

7. Safety device according to one of the preceding claims, **characterized in that** the safety device (4) has a carrying device (16), in particular a safety suit, which can be worn on the body, for the capture device (5), in particular for the capture modules (9), and possibly an energy supply (13).

8. Safety device according to one of the preceding claims, **characterized in that** the evaluation and control device (6) has a computing unit and a program for creating a personal safety skeleton (22) from the data from the capture device (5) and a program for creating a machine safety skeleton (23) from the received data relating to the current hazardous area of the automatic machine (2), in particular the industrial robot.

9. Working apparatus having a moving automatic machine (2), in particular an industrial robot, **characterized in that** the working apparatus (1) has a safety device (4) for workers (3) that is designed according to at least one of Claims 1 to 8.

10. Safety method for workers (3) in the working area of moving automatic machines (2), in particular industrial robots, wherein a safety device (4) is used to permanently capture the spatial position and a possible movement of the worker and to monitor for collisions or risks of collision, wherein the safety device (4) has a mobile capture device (5), which is worn by the worker (3) and is intended to locate the worker (3), and an evaluation and control device (6), wherein the devices (5, 6) have a preferably wireless communication connection, and the evaluation and control device (6) also has an interface (8) for inputting data relating to the current hazardous area of the automatic machine (2), in particular the industrial robot, **characterized in that**, in the event of a collision or a risk of collision, a warning signal is transmitted to the worker (3), wherein, in the event of a collision or a risk of collision, the worker (3) is provided with body-specific feedback and the affected body part is signalled.

11. Safety method according to Claim 10, **characterized in that** the spatial positions and possibly the movements of individual relevant body parts of the worker (3) are deliberately captured using a modular capture device (5) and are used for collision and risk analysis.

12. Safety method according to Claim 10 or 11, **characterized in that** the capture device (5), in particular its capture modules (9), is worn directly on the body of the worker (3) and is assigned to the relevant body parts, wherein, in the event of a collision or a risk of collision, a warning signal is transmitted to the worker (3) by means of a haptic or tactile signal unit (12) of a capture module (9).

13. Safety method according to one of Claims 10 to 12, **characterized in that** a virtual personal safety skeleton (22) is created from captured body-specific data relating to the worker (3) and is used for collision and risk analysis, wherein the skeleton parts, in particular the limbs, are surrounded by a virtual envelope area (25) with a safety distance, which is checked in a computational model for a possible collision with an automatic machine (2).

14. Safety method according to one of Claims 10 to 13, **characterized in that** the moving machine (2) is symbolized using one or more motion vectors and envelope areas (25), wherein collisions are captured in good time and with the inclusion of the required response times or processing delays by means of the envelope areas (25).

15. Safety method according to one of Claims 10 to 14, **characterized in that** an advance warning area is generated by deliberately expanding one or more envelope areas (25) in the direction of movement.

## Revendications

1. Dispositif de sécurité destiné à des travailleurs (3) dans la zone de travail de machines automatiques en mouvement (2), en particulier de robots industriels, dans lequel le dispositif de sécurité (4) détecte en permanence la position dans l'espace et un mouvement éventuel du travailleur et la surveille quant à des collisions ou des risques de collision, et présente un dispositif de détection mobile (5), à porter par le travailleur (3), pour localiser le travailleur (3), ainsi qu'un dispositif d'évaluation et de commande (6), dans lequel les dispositifs (5, 6) se trouvent en liaison de communication de préférence sans fil et le dispositif d'évaluation et de commande (6) présente également une interface (8) pour l'entrée de données concernant la zone à risque actuelle de la machine automatique (2), en particulier du robot industriel, **caractérisé en ce qu'**en cas de collision ou de risque de collision, le dispositif de sécurité (4) transmet un signal d'avertissement à destination du travailleur (3), le dispositif de sécurité (4) délivrant au travailleur (3) une information en retour spécifique au corps et signalant la partie du corps concernée.

2. Dispositif de sécurité selon la revendication 1, **caractérisé en ce que** le signal d'avertissement présente une intensité de signal ou une force de signal qui dépend de la distance entre le travailleur et la machine en mouvement (2) et est en particulier d'autant plus élevée que la distance est réduite et que le risque de collision est grand.

3. Dispositif de sécurité selon la revendication 1 ou 2, **caractérisé en ce que** le dispositif de détection (5) détecte la position dans l'espace et des mouvements éventuels du travailleur (3) et les communique au dispositif d'évaluation et de commande (6), dans lequel le dispositif d'évaluation et de commande (6) compare les données du dispositif de détection (5) et les données concernant la zone à risque actuelle de la machine automatique (2), en particulier du robot industriel, et détecte une collision existante ou imminente entre le travailleur (3) et la machine automatique (2), en particulier le robot industriel, et en cas de collision ou de risque de collision détecté(e), émet un signal d'avertissement par l'intermédiaire d'une unité de signalisation (12) ou d'un affichage (19).

4. Dispositif de sécurité selon la revendication 1, 2 ou 3, **caractérisé en ce que** le dispositif de détection (5) présente plusieurs modules de détection mobiles (9) qui peuvent être associés à plusieurs parties du corps pertinentes, en particulier à des membres, du travailleur (3), et qui enregistrent la position dans l'espace et des mouvements éventuels de la partie du corps en question.

5. Dispositif de sécurité selon l'une quelconque des revendications précédentes, **caractérisé en ce qu'**un module de détection (9) présente une unité de signalisation (12) pour signaler au travailleur (3) une collision ou un risque de collision, l'unité de signalisation (12) étant de préférence réalisée sous forme d'unité haptique ou tactile, en particulier sous forme d'unité de vibration, ou sous forme d'unité optique et/ou acoustique.

6. Dispositif de sécurité selon l'une quelconque des revendications précédentes, **caractérisé en ce que** les modules de détection (9) présentent respectivement un capteur (10), en particulier un capteur inertiel, pour détecter la position dans l'espace et des mouvements éventuels de la partie du corps en question.

7. Dispositif de sécurité selon l'une quelconque des revendications précédentes, **caractérisé en ce que** le dispositif de sécurité (4) présente un dispositif portatif (16) pouvant être porté sur le corps, en particulier une combinaison de sécurité, pour le dispositif de détection (5), en particulier pour les modules de détection (9) et le cas échéant une alimentation en énergie (13).

8. Dispositif de sécurité selon l'une quelconque des revendications précédentes, **caractérisé en ce que** le dispositif d'évaluation et de commande (6) présente une unité de calcul et un programme pour créer un squelette de sécurité de personne (22) à partir des données du dispositif de détection (5) et un programme pour créer un squelette de sécurité de machine (23) à partir des données obtenues concernant la zone à risque actuelle de la machine automatique (2), en particulier du robot industriel.

9. Dispositif de travail, comprenant une machine automatique en mouvement (2), en particulier un robot industriel, **caractérisé en ce que** le dispositif de travail (1) présente un dispositif de sécurité (4) destiné aux travailleurs (3) qui est réalisé selon au moins l'une des revendications 1 à 8.

10. Procédé de sécurité destiné à des travailleurs (3) dans la zone de travail d'une machine automatique en mouvement (2), en particulier d'un robot industriel, dans lequel un dispositif de sécurité (4) détecte en permanence la position dans l'espace et un mouvement éventuel du travailleur et la surveille quant à des collisions ou risques de collision, dans lequel le dispositif de sécurité (4) présente un dispositif de détection mobile (5), porté par le travailleur (3), pour localiser le travailleur (3), ainsi qu'un dispositif d'évaluation et de commande (6), dans lequel les dispositifs (5, 6) se trouvent dans une liaison de communication de préférence sans fil et le dispositif d'évaluation et de commande (6) présente aussi une interface (8) pour entrer des données concernant la zone à risque actuelle de la machine automatique (2), en particulier du robot industriel, **caractérisé en ce qu'**en cas de collision ou de risque de collision, un signal d'avertissement est transmis au travailleur (3), dans lequel, en cas de collision ou de risque de collision, une information en retour spécifique au corps est délivrée à destination du travailleur (3) et la partie du corps en question est signalée.

11. Procédé de sécurité selon la revendication 10, **caractérisé en ce qu'**un dispositif de détection (5) modulaire permet de détecter de manière ciblée les positions dans l'espace et le cas échéant les mouvements de parties du corps pertinentes individuelles du travailleur (3) et de les utiliser pour l'analyse de collision et de risque de collision.

12. Procédé de sécurité selon la revendication 10 ou 11, **caractérisé en ce que** le dispositif de détection (5), en particulier ses modules de détection (9), est porté directement sur le corps du travailleur (3) et est associé aux parties du corps pertinentes, dans lequel, en cas de collision ou de risque de collision, un signal d'avertissement est transmis au travailleur (3) par une unité de signalisation haptique ou tactile (12) d'un module de détection (9).

13. Procédé de sécurité selon l'une quelconque des revendications 10 à 12, **caractérisé en ce qu'**à partir des données spécifiques au corps détectées du travailleur (3) un squelette virtuel de sécurité de personne (22) est créé et utilisé pour l'analyse de collision et de risque de collision, dans lequel les parties du squelette, en particulier les membres, sont entourées d'une zone d'enveloppe virtuelle (25) avec une distance de sécurité qui est contrôlée dans un modèle de calcul quant à une collision éventuelle avec une machine automatique (2).

14. Procédé de sécurité selon l'une quelconque des revendications 10 à 13, **caractérisé en ce que** la machine en mouvement (2) est symbolisée par un ou plusieurs vecteurs de mouvement et des zones d'enveloppe (25), dans lequel les zones d'enveloppe (25) permettent de détecter en temps voulu des collisions tout en tenant compte des temps de réponse nécessaires ou des retards de traitement.

15. Procédé de sécurité selon l'une quelconque des revendications 10 à 14, **caractérisé en ce qu'**une zone d'avertissement préalable est générée par une extension ciblée d'une ou de plusieurs zones d'enveloppe (25) dans le sens du mouvement.
